# EUROPEAN PATENT APPLICATION

(11) **EP 4 679 575 A1**
(43) Date of publication of application: **14.01.2026**
(21) Application number: 25179021.8
(22) Date of filing: 27.05.2025
(51) Int. Cl.: H01M 50/103, H01M 50/107, H01M 50/147, H01M 50/152, H01M 50/159, H01M 50/169

(54) **BATTERY AND ELECTRONIC APPARATUS**

(30) Priority: 11.07.2024 CN 202421648666 U
(71) Applicant: AESC Japan Ltd., Yokohama-Shi, Kanagawa 220-0012 (JP)
(72) Inventor: CHEN, Xiu, Wuxi City, 214443 (CN)
(74) Representative: Becker, Eberhard

(57) **Abstract**

A battery (100) and an electronic apparatus are provided. The battery (100) includes an outer casing (1) including an opening and a cover plate (2) closing the opening. A portion of the cover plate (2) adjacent to an edge protrudes toward an inner cavity of the outer casing (1) to form a boss (21) embedded into the opening. A side of the boss (21) away from the inner cavity of the outer casing (1) includes a groove (22), and a portion of the cover plate (2) located at a radial outer side of the boss (21) forms a connecting edge (24) overlapping an end portion of the outer casing (1). An inner wall of the groove (22) includes a bottom wall (222) and an outer groove wall (223) surrounding the bottom wall (222). A stamped groove (23) is provided between the bottom wall (222) and the outer groove wall (223).

## Description

### BACKGROUND

### Technical Field

The disclosure relates to the technical field of batteries, and in particular, relates to a battery and an electronic apparatus.

### Description of Related Art

With the development of social economy, more and more electronic apparatuses, such as new energy vehicles, communication base stations, energy storage containers, etc., use batteries as energy storage and supply devices.

At present, for some battery models, when the outer casings are sealed by laser welding, certain gaps are provided between the side walls and the outer casings due to the bosses formed by stamping at the edges of the cover plates, so that incident laser is easily reflected within the gaps and reach the terminal assemblies inside the outer casings as a result. The terminal assemblies may be damaged, and product quality problems may thereby occur.

### SUMMARY

In view of the above problems, the disclosure provides a battery and an electronic apparatus through which when welding is performed to seal an outer casing of the battery, laser is prevented from irradiating a terminal assembly, so that the terminal assembly is prevented from being damaged, and product yield is ensured.

The disclosure provides a battery including an outer casing including an opening and a cover plate closing the opening. A portion of the cover plate adjacent to an edge protrudes toward an inner cavity of the outer casing to form a boss. A side of the boss facing away from the inner cavity of the outer casing includes a groove, and a portion of the cover plate located at a radial outer side of the boss forms a connecting edge. The boss is embedded into the opening, and the connecting edge overlaps an end portion of the outer casing. Further, a welding mark is formed between the connecting edge and the end portion of the outer casing. In a direction from a radial outer side to a radial inner side of the cover plate, a size of a cross section of the welding mark gradually decreases. The cross section is determined by a central axis of the cover plate and any radial line. An inner wall of the groove includes a bottom wall and an outer groove wall surrounding an outer periphery of the bottom wall. A stamped groove is provided at connection between the bottom wall and the outer groove wall.

In some embodiments, the outer groove wall includes a straight wall portion extending in a thickness direction of the cover plate. In a radial direction of the cover plate, an outermost end of the stamped groove does not exceed the straight wall portion.

In some embodiments, the stamped groove has a groove cross section taken along a reference plane. The reference plane is determined by the central axis of the cover plate and any radial line. The groove cross section is symmetrically structured at a portion on either side of the central axis in the radial direction of the cover plate.

In some embodiments, the stamped groove has a groove cross section taken along a reference plane. The reference plane is determined by the central axis of the cover plate and any radial line. The groove cross section is an asymmetric structure at a portion on either side of the central axis in the radial direction of the cover plate. Further, a deepest part of the stamped groove is located on a side of a center line L of the groove cross section of the stamped groove in a width direction thereof close to the outer groove wall.

In some embodiments, a height H1 of the cover plate at the boss is in a range of 0.8 mm ≤ H1 ≤ 5 mm, a depth H2 of the groove in a thickness direction of the cover plate is in a range of 0.1 mm ≤ H2 ≤ 4.5 mm, a depth H3 of the stamped groove in the thickness direction of the cover plate is in a range of 0.05 mm ≤ H3 ≤ 0.4 mm, an outer side surface of the boss includes a straight line extension portion attached to an inner wall of the outer casing, a height H4 of the straight line extension portion in the thickness direction of the cover plate is in a range of H4 ≥ 0.1 mm, in a radial direction of the cover plate, a width W1 of the stamped groove and a width W2 of the groove satisfy 0.05≤W1/W2≤0.2, and/or connection between the outer side surface and a bottom surface of the boss is further provided with an outer chamfer. A radius R1 of the outer chamfer is in a range of 0.1 mm ≤ R1 ≤ 1.2 mm.

In some embodiments, the battery further includes a terminal assembly disposed in the outer casing, and a tab is provided at one end of the terminal assembly facing the cover plate. A portion of the bottom wall other than the stamped groove is provided with a welding region, and the cover plate is electrically connected to the tab through the welding region.

In some embodiments, the battery further includes a current-collecting plate located between the cover plate and the tab and connected to the welding region of the cover plate and the tab. The boss abuts against the current-collecting plate.

In some embodiments, in the radial direction of the cover plate, a minimum spacing T between the stamped groove and the welding region satisfies 0.2 mm ≤ T ≤ 1 mm.

In some embodiments, hardness of the cover plate is greater than or equal to 100 HV.

The second aspect of the disclosure further provides an electronic apparatus including the battery provided by the first aspect of the disclosure.

According to an embodiment of the disclosure, in the battery, the boss is provided at the edge of the cover plate, so that the boss may be embedded into the opening of the outer casing. The boss is provided with the connecting edge that is overlapped with and welded to the end surface of the outer casing along the radial outer side, and the groove is provided on the side of the boss facing away from the terminal assembly. The stamped groove is formed by stamping in the groove. During the formation process of the stamped groove, due to the pressure generated by stamping equipment, metal at the connection between the bottom wall and the outer groove wall of the groove is squeezed to flow toward the outer side of the boss. The chamfer on the side of the boss facing the inner wall of the outer casing is decreased, the straight line extension portion of the outer side surface of the boss is lengthened, and the contact between the outer side surface of the boss and the inner wall of the outer casing is improved, so that the boss better blocks the laser. In this way, when the laser welding equipment is used to weld the gap between the connecting edge and the end surface of the outer casing, after the laser enters the inside of the outer casing, the laser is prevented from reflecting in the gap between the outer side surface of the boss and the inner wall of the outer casing. The laser is thus prevented from irradiating the terminal assembly and causing damage to the terminal assembly, so the welding quality of the battery is improved, and product yield is ensured.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are some embodiments of the disclosure, and for a person having ordinary skill in the art, other drawings can be obtained based on these drawings without an inventive effort.
FIG.1 is a structural schematic view of a battery according to some embodiments of the disclosure.
FIG. 2 is a cross-sectional view taken along a groove cross section A-A in FIG. 1.
FIG. 3 is an enlarged view of a circled portion B in FIG. 2.
FIG.4 is a schematic view of flowing of a cover plate material during a stamped groove forming process in some embodiments of the disclosure.
FIG.5 is a schematic view of the flowing of the cover plate material during the stamped groove forming process in some other embodiments of the disclosure.
FIG.6 is a structural schematic view of a portion of the battery according to some embodiments of the disclosure.
FIG.7 is a structural schematic view of a terminal assembly according to some embodiments of the disclosure.

Description of Reference Numerals:
100- battery;
1- outer casing: 11- side wall: 12- top wall;
2- cover plate, 21- boss, 210- outer side surface, 211- outer chamfer, 212- straight line extension portion, 213- bottom surface, 22- groove, 221- inner chamfer, 222- bottom wall, 223- outer groove wall, 2231- straight wall portion, 224- welding region, 23- stamped groove, 24- connecting edge, 25- welding mark;
3- terminal assembly, 31- tab, 32- positive terminal sheet, 321- positive current-collecting plate, 322- positive active coating layer, 323- positive tab, 33- negative terminal sheet, 331- negative current collector, 332- negative active coating layer, 34- separator; and
4- current-collecting plate, 5- positive current-collecting plate, 6- terminal post, L- center line.

### DESCRIPTION OF THE EMBODIMENTS

In order to make the above-mentioned purposes, features, and advantages of the embodiments of the disclosure more apparent and understandable, the technical solutions in the embodiments of the disclosure are to be described clearly and completely in together with the accompanying drawings of the embodiments of disclosure. Obviously, the described embodiments are only a part of the embodiments of the disclosure, not all of the embodiments. Based on the embodiments in the disclosure, all other embodiments obtained by a person having ordinary skill in the art without creative labor are within the scope of protection of the disclosure.

With the development of social economy, more and more electronic apparatuses, such as new energy vehicles, communication base stations, energy storage containers, etc., use batteries as energy storage and supply devices. At present, for some battery models, stamping processes are adopted to provide bosses at the edges of cover plates, with the bosses embedded into the outer casings. Laser welding approaches are then used to seal the outer casings. However, for steel casing batteries or other batteries with higher outer casing strength, their cover plates, due to their greater strength, are more difficult to form during stamping, which may easily cause the chamfers on the side walls of the stamped bosses used for mating with the outer casings to be larger. A larger chamfer may lead to a shorter straight line portion on the side wall of the boss, or even no straight line portion, resulting in a certain gap between the side wall of the boss and the outer casing. Thus, when the mating seam between the cover plate and the outer casing is welded, the incident laser may easily reflect within the gap and reach the terminal assembly inside the outer casing. The terminal assembly may be damaged, and product quality issues may thereby occur.

In view of the foregoing, the embodiment provides a battery 100, which may be a primary battery or a secondary battery. A primary battery refers to a battery that cannot be recharged after discharge, while a secondary battery refers to a battery that can be reused after discharge through charging to reactivate the active materials. The battery may be a lithium-ion battery, sodium-ion battery, sodium-lithium-ion battery, lithium metal battery, sodium metal battery, lithium-sulfur battery, magnesium-ion battery, nickel-cadmium battery, etc., which is not limited by the embodiments of the disclosure.

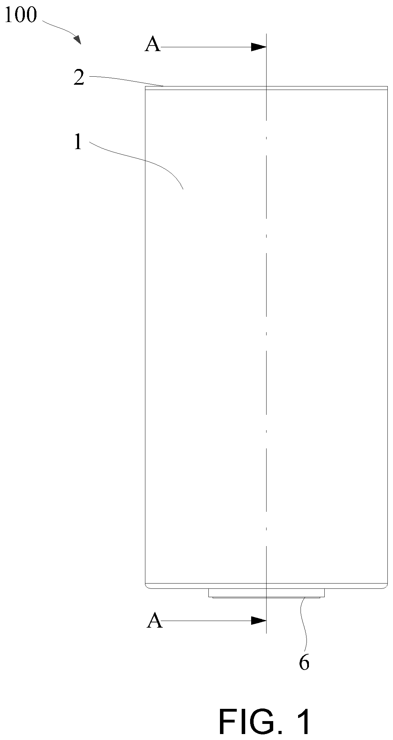

With reference to FIG.1 to FIG.2 together, specifically, the battery 100 of this embodiment may include an outer casing 1, a cover plate 2, and a terminal assembly 3. Herein, one end of the outer casing 1 is provided with an opening, and an inner cavity of the outer casing 1 acts as an accommodating cavity for the terminal assembly 3. Taking the battery 100 as a cylindrical battery as an example, its outer casing 1 may be in the form of a cylindrical tube with the opening at a top end or at a bottom end. An inner side of the outer casing 1 defines a cylindrical accommodating cavity, and the cover plate 2 may be covered at the opening of the outer casing 1 and seal the opening.

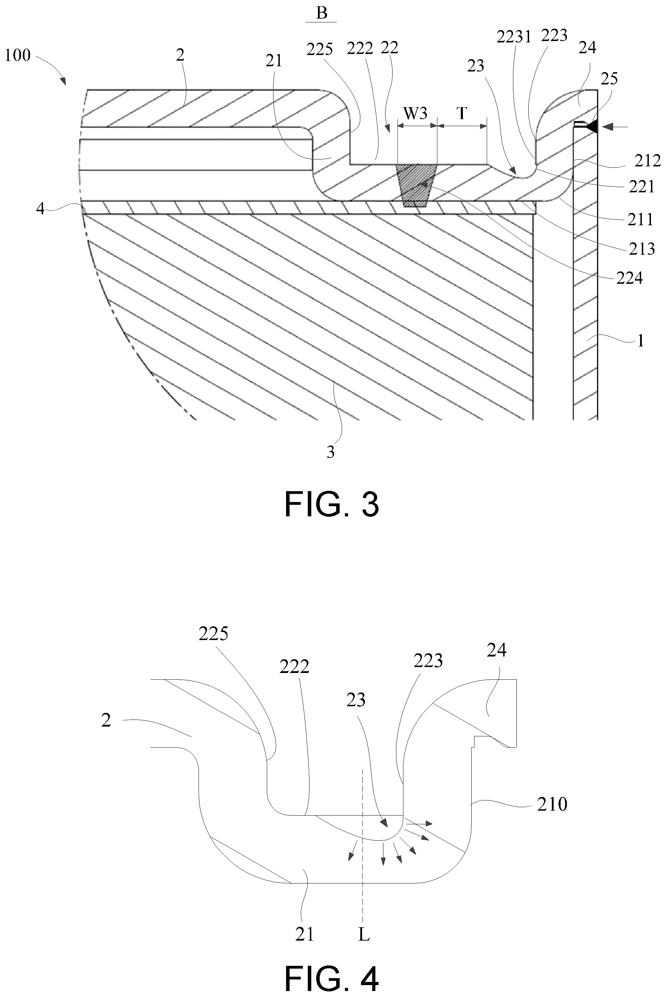

Referring to FIG. 3, the terminal assembly 3 is disposed in the inner cavity of the outer casing 1, a tab 31 is provided at an end of the terminal assembly 3 facing the cover plate 2, and the tab 31 is electrically connected to the cover plate 2. For instance, the cover plate 2 may be a negative cover plate, and the tab 31 may be a negative tab. The negative cover plate and the negative tab may be directly welded to achieve electrical connection, or the electrical connection between the negative cover plate and the negative tab may be achieved through an intermediate transferring member such as a current-collecting plate 4. In this case, both the negative cover plate 2 and the negative tab are welded to the current-collecting plate 4.

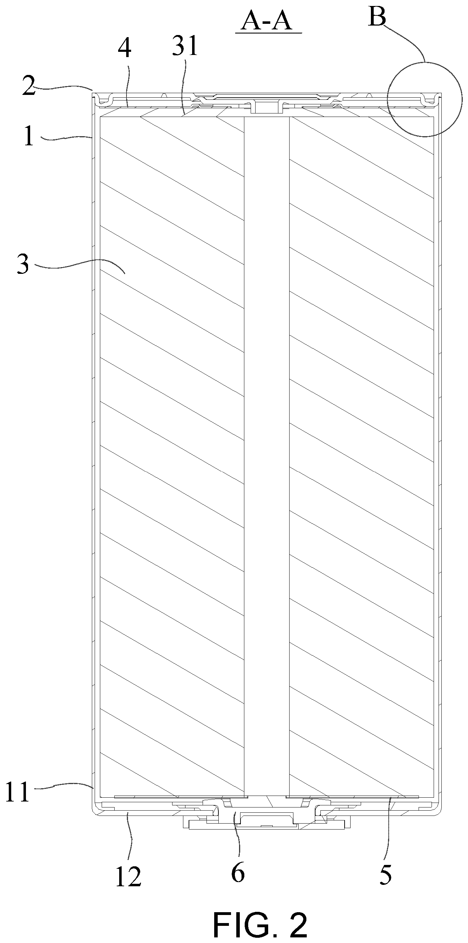

Referring to FIG. 2, the outer casing 1 further includes a side wall 11 and a top wall 12. The side wall 11 is arranged around a periphery of the top wall 12, and the top wall 12 is located at one end of the side wall 11 opposite to the opening. The battery 100 is further provided with a positive current-collecting plate 5 and a terminal post 6 passing through the top wall. A positive tab 323 is provided at one end of the terminal assembly 3 facing the terminal post 6, the positive current-collecting plate 5 is arranged between the terminal post 6 and the terminal assembly 3, and the positive current-collecting plate 5 is welded to both the terminal post 6 and the positive tab 323 of the terminal assembly 3. Herein, the abovementioned current-collecting plate 4 may act as a negative current-collecting plate of the battery 100, while the tab 31 at the end of the terminal assembly 3 facing the cover plate 2 acts as the negative tab of the terminal assembly 3.

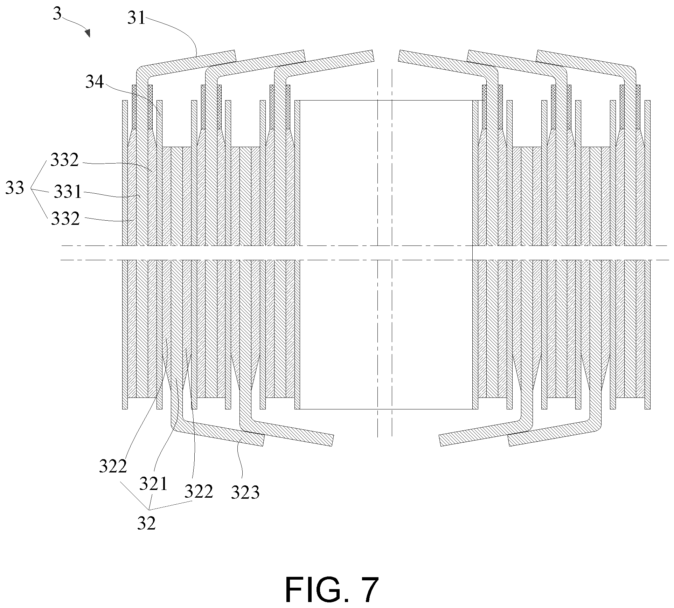

Optionally, referring to FIG. 7, the terminal assembly 3 may include a positive terminal sheet 32, a negative terminal sheet 33, and a separator 34. The positive terminal sheet 32 includes a positive current collector 321 and a positive active coating layer 322 coated on a surface of the positive current collector 321. The negative terminal sheet 33 includes a negative current collector 331 and a negative active coating layer 332 coated on a surface of the negative current collector 331. Taking the battery 100 as a cylindrical battery 100 as an example, the positive terminal sheet 32, the separator 34, and the negative terminal sheet 33 are stacked in sequence and then wound to form a wound terminal assembly 3.

Certainly, in other possible embodiments, the battery 100 may be a rectangular battery. In this case, the positive terminal sheet 32, the separator 34, and negative terminal sheet 33 may be sequentially stacked and then wound to form a wound terminal assembly 3. Alternatively, the positive terminal sheet 32, the separator 34, and the negative terminal sheet 33 are all multi-layered, with the positive terminal sheet 32 and the negative terminal sheet 33 stacked in an alternating manner, and the positive terminal sheet 32 and negative terminal sheet 33 separated by the separator 34 to form a stacked terminal assembly 3.

Referring to FIG. 3, a portion of the cover plate 2 adjacent to an edge protrudes toward the inner cavity of the outer casing 1 to form a boss 21, and a side of the boss 21 facing away from the inner cavity of the outer casing 1 includes a groove 22. For instance, the boss 21 may be formed by stamping the edge of the cover plate 2. During stamping, the boss 21 is formed on an inner surface (i.e., the surface facing the accommodating cavity) of the cover plate 2. The groove 22 is formed on the side of the boss 21 facing away from the accommodating cavity (i.e., an outer surface of the cover plate 2), and a portion of the cover plate 2 at a radial outer side of the boss 21 forms a connecting edge 24. When the boss 21 is inserted in the opening, the connecting edge 24 overlaps with an end portion of the outer casing 1, and the connecting edge 24 is welded to an end surface of the outer casing 1. For stance, the welding approach may be laser welding, ultrasonic welding, etc. A welding mark 25 is formed between the connecting edge 24 and the end surface of the outer casing 1. A size of a cross section of the welding mark 25 gradually decreases in a direction from a radial outer side to a radial inner side of the cover plate 2. The cross section herein is determined by a central axis of the cover plate 2 and any radial line, such as the A-A cross section shown in FIG. 1 and FIG. 2.

Referring to FIG. 3, it should be noted that in this embodiment, the laser welding equipment may perform laser seam welding from the side of the outer casing 1, in a radial direction of the cover plate 2 toward a seam between the connecting edge 24 and the end surface of the outer casing 1 (as shown by the arrow direction at the welding mark 25 in FIG. 3), to form the welding mark 25. Moreover, during the welding process, the laser welding equipment may remain in a fixed position, with only the battery 100 rotating to perform the welding. When the laser welding method is adopted to weld the connecting edge 24 and the outer casing 1, in a transmission direction of the laser and away from the welding equipment, the size of the cross-sectional of the welding mark 25, such as a width of the cross section, gradually decreases. In this embodiment, the welding mark 25 is formed between the connecting edge 24 and the end surface of the outer casing 1, and in the direction from the radial outer side toward the radial inner side of the cover plate 2, the size of the cross section of the welding mark 25 gradually decreases. By using laser seam welding approach to weld the fitting seam between the connecting edge 24 and the outer casing 1, the gap can be sealed well, and with mature and reliable processes, the welding quality can be ensured.

With reference to FIG. 3, an inner wall of the groove 22 includes a bottom wall 222 and an outer groove wall 223 surrounding an outer periphery of the bottom wall 222. A stamped groove 23 is provided at connection between the bottom wall 222 and the outer groove wall 223. That is, the stamped groove 23 is formed on an inner chamfer 221 at the connection between the bottom wall 222 and the outer groove wall 223. Optionally, the stamped groove 23 and the groove 22 may be formed together in a same stamping process.

It should be noted that in the case where the stamped groove 23 is not provided, when the cover plate 2 is stamped to form the boss 21, since an outer chamfer 211 at intersection of an outer side surface 210 of the boss 21 (opposite to the outer groove wall 223 of the groove 22) and the bottom surface (opposite to the bottom wall 222 of the groove 22) is relatively large, a straight line extension portion 212 of the outer surface of the boss 21 (this straight line extension portion 212 is a portion where the outer side surface 210 of the boss 21 contacts with the outer casing 1, and this portion extends in an axial direction of the cover plate 2) is relatively short. A certain gap is provided between the outer side surface 210 of the boss 21 and the inner wall of the outer casing 1. In this way, when the connecting edge 24 and the end surface of the outer casing 1 are welded to form the welding mark 25, the laser emitted by the laser welding equipment toward the gap between the connecting edge 24 and the end surface of the outer casing 1, after entering the inner cavity, may easily reflect in the gap between the outer side surface 210 of the boss 21 and the inner wall of the outer casing 1 and finally reflect onto the terminal assembly 3. The terminal assembly 3 may thereby be damaged. However, in this embodiment, by providing the stamped groove 23 at the connection between the bottom wall 222 and the outer groove wall 223 of the groove 22, during the forming process of the stamped groove 23, the stamping equipment compresses the inner wall of the groove 22, causing a material at the connection between the bottom wall 222 and the outer groove wall 223 to flow and deform toward the outer casing 1 side. The outer chamfer 211 of the boss 21 is decreased, the straight line extension portion 212 of the outer side surface 210 of the boss 21 is lengthened, and the contact between the outer side surface 210 of the boss 21 and the inner wall of the outer casing 1 is improved. In this way, even if the laser enters the inside of the outer casing 1 through the gap between the connecting edge 24 and the end surface of the outer casing 1, the boss 21 may block the laser, so the laser is prevented from reflecting onto the terminal assembly 3 and causing damage to the terminal assembly 3.

According to an embodiment of the disclosure, in the battery 100, the boss 21 is provided at the edge of the cover plate 2, so that the boss 21 may be embedded into the opening of the outer casing 1. The boss 21 is provided with the connecting edge 24 that is overlapped with and welded to the end surface of the outer casing 1 along the radial outer side, and the groove 22 is provided on the side of the boss 21 facing away from the terminal assembly 3. The stamped groove 23 is provided at the connection between the bottom wall 222 and the outer groove wall 223 of the groove 22. During the formation process of the stamped groove 23, due to the pressure generated by the stamping equipment, the metal at the connection between the bottom wall 222 and the outer groove wall 223 of the groove 22 is squeezed to flow toward the outer side of the boss. The chamfer on the side of the boss 21 facing the inner wall of the outer casing 1 is decreased, the straight line extension portion 212 of the outer side surface 210 of the boss 21 is lengthened, and the contact between the outer side surface 210 of the boss 21 and the inner wall of the outer casing 1 is improved, so that the boss 21 may better block the laser. In this way, when the laser welding equipment is used to weld the gap between the connecting edge 24 and the end surface of the outer casing 1, after the laser enters the inside of the outer casing 1, the laser is prevented from reflecting in the gap between the outer side surface 210 of the boss 21 and the inner wall of the outer casing 1. The laser is thus prevented from irradiating the terminal assembly 3 and causing damage to the terminal assembly 3, so the welding quality of the battery 100 is improved, and product yield is ensured.

In some embodiments, referring to FIG. 3 and FIG. 4, an opening direction of the stamped groove 23 extends in the axial direction of the cover plate 2 and away from the inner cavity of the outer casing 1. The outer groove wall 223 of the groove 22 includes a straight wall portion 2231 extending in a thickness direction of the cover plate 2, and the straight wall portion 2231 and the straight line extension portion 212 of the outer side surface 210 of the boss 21 are opposite to each other and parallel. In the radial direction of the cover plate 2, an outermost end of the stamped groove 23 does not exceed the straight wall portion 2231. In this way, it is only necessary to provide a protruding structure matching the stamped groove 23 on the stamping equipment, and the groove 22 and the stamped groove 23 may be simultaneously formed using the stamping equipment. That is, when stamping is performed in the thickness direction of the cover plate 2, no interference is provided between the protruding structure on the stamping equipment and the outer groove wall 223 of the groove 22 in the thickness direction of the cover plate 2. After the stamped groove 23 is processed, the stamping equipment may withdraw from the groove 22 easily.

In addition, an opening direction of the groove 22 and the opening direction of the stamped groove 23 are substantially the same. As such, the stamping equipment only needs to perform one stamping in the thickness direction of the cover plate 2 to form the stamped groove 23 and the groove 22, so that the manufacturing process of the cover plate 2 is more simple and efficient. Certainly, it may be understood that two stamping processes may also be used, that is, the groove 22 is stamped first, and the stamped groove 23 is then stamped.

The stamped groove 23 has a groove cross section taken along a reference plane (e.g., the A-A cross section shown in FIG. 1 and FIG. 2), and the reference plane may be determined by the center axis of the cover plate 2 and any radial line. In other words, the reference plane passes through the center axis and the radial line of the cover plate 2. Since the stamped groove 23 is an annular shape around the cover plate 2, the groove cross section of the stamped groove 23 at the reference plane includes two portions, with the two portions located on both sides of the center axis of the cover plate 2.

Referring to FIG. 3, in this embodiment, the groove cross section is symmetrically structured at a portion on either side of the central axis in the radial direction of the cover plate 2. For instance, the stamped groove 23 on any radial side of the center axis of the cover plate 2 may be formed as V-shaped, U-shaped, or other symmetrical structures. In this way, during the stamping process, a cover plate material corresponding to the stamped groove 23 may flow uniformly toward the periphery, so the inner chamfer of the boss 21 may be decreased, and a length of the straight line extension portion 212 on the outer side surface 210 of the boss 21 may be increased.

In some other embodiments, referring to FIG. 4, the groove cross section is an asymmetric structure at a portion on either side of the central axis in the radial direction of the cover plate 2. Further, a deepest part of the stamped groove 23 is located on a side of a center line L of the groove cross section in a width direction thereof close to the outer groove wall 223. Herein, the width direction of the stamped groove 23 is parallel to the radial direction of the cover plate 2. As such, compared to the scheme where the stamped groove 23 has a symmetrical structure, in this embodiment, when processing the stamped groove 23, the material of the cover plate 2 between the inner chamfer 221 and the outer chamfer 211 may mainly flow and deform toward the outer casing 1 side. Material flow and deformation in other directions are thereby lowered, the outer chamfer 211 of the boss 21 is more efficiently decreased, and the length of the straight line extension portion 212 on the outer side surface 210 of the boss 21 is increased. The forming efficiency of the stamped groove 23 is thereby be improved, and the tight fit between the boss 21 and the outer casing 1 may also be ensured.

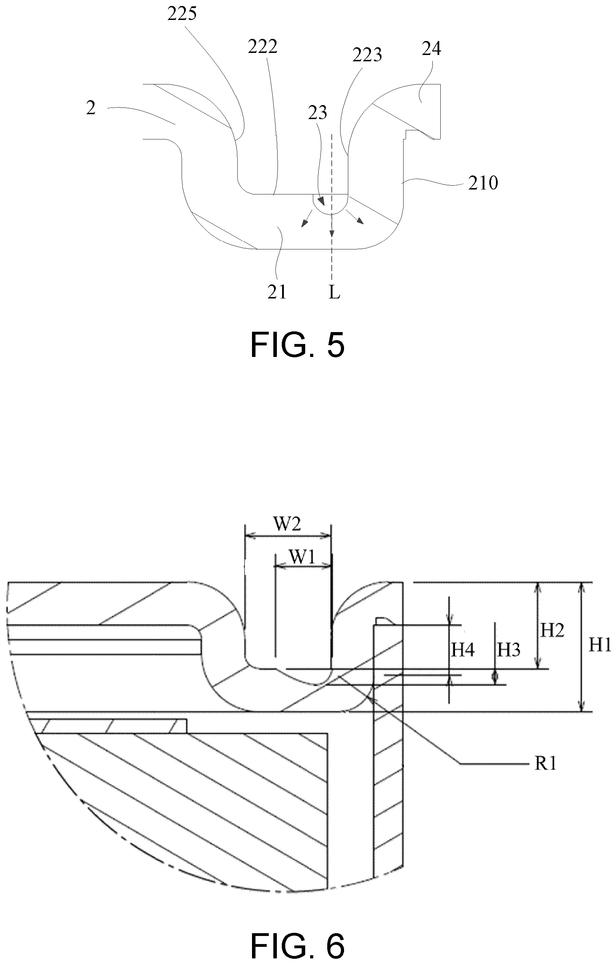

In some embodiments, referring to FIG. 6, a height H1 of the cover plate 2 at the boss 32 is in a range of 0.8 mm ≤ H1 ≤ 5 mm. The height H1 of the cover plate 2 at the boss 21 is a sum of a height of the boss 21 and a thickness of a non-boss portion of the cover plate 2, for example, the value of the height H1 of the cover plate 2 at the boss 21 may be 0.8mm, 1mm, 1.5mm, 2mm, 2.5mm, 3.5mm, 4mm, 4.5mm, or 5mm. Certainly, the disclosure does not impose any limitation on this, and the height H1 of the cover plate 2 at the boss 21 may be reasonably selected within the above range according to actual needs. In this way, on one hand, the height of the boss 21 is prevented from being excessively small, for example, less than 0.8mm, which may result in the boss 21 being embedded into the outer casing 1 at an insufficient depth, preventing the boss 21 from effectively blocking the laser, and preventing the cover plate 2 from forming a stable fit with the outer casing 1. On the other hand, the height of the boss 21 is prevented from being excessively large (e.g., greater than 5mm), and the boss 21 is thus prevented from occupying too much internal space of the outer casing 1, so internal space utilization and energy density of the battery 100 are thus improved.

In some embodiments, referring to FIG. 6, a depth H2 of the groove 22 in the thickness direction of the cover plate 2 is in a range of 0.1 mm ≤ H2 ≤ 4.5 mm. For instance, the depth H2 of the groove 22 in the thickness direction of the cover plate 2 may be 0.1mm, 0.2mm, 0.5mm, 0.8mm, 1mm, 1.5mm, 2mm, 2.5mm, 3mm, 3.5mm, 4mm, or 4.5mm. Certainly, the disclosure does not impose any limitation on this, and the depth H2 of the groove 22 in the thickness direction of the cover plate 2 may be reasonably selected within the above range according to actual needs. In this way, on one hand, the depth of the groove 22 is prevented from being excessively small, for example, less than 0.1mm, which may result in the height of the boss 21 being excessively small, preventing the boss 21 from effectively blocking the laser and from forming a stable fit with the outer casing 1. On the other hand, the depth of the groove 22 is prevented from being excessively large (e.g., greater than 4.5mm), and the boss 21 is thus prevented from occupying too much internal space of the outer casing 1, so the internal space utilization and energy density of the battery 100 are thus improved. It can be understood that the depth of the groove 22 is always less than the thickness of the cover plate 2 at the boss 21.

In some embodiments, referring to FIG. 6, a depth H3 of the stamped groove 23 in the thickness direction of the cover plate 2 is in a range of 0.05 mm ≤ H3 ≤ 0.4 mm. For instance, the depth H3 of the stamped groove 23 in the thickness direction of the cover plate 2 may be 0.05mm, 0.1mm, 0.15mm, 0.2mm, 0.25mm, 0.3mm, 0.35mm, or 0.4mm. Certainly, the disclosure does not impose any limitation on this, and the depth H3 of the stamped groove 23 in the thickness direction of the cover plate 2 may be reasonably selected within the above range according to actual needs. In this way, on one hand, the situation where the depth of the stamped groove 23 is excessively small, for example less than 0.05mm, resulting in insufficient compression of the cover plate 2 material between the inner chamfer 221 and the outer chamfer 211 during the forming process of the stamped groove 23, is avoided. In the above situation, the outer chamfer 211 of the boss 21 is not effectively reduced, and the outer side surface 210 of the boss 21 cannot effectively adhere to the inner wall of the outer casing 1, making the laser blocking effect of the boss 21 limited. On the other hand, the situation where the depth of the stamped groove 23 is excessively large, for example greater than 0.4mm, causing the bottom wall 222 of the groove 22 to be punctured and resulting in damage and scrapping of the cover plate 2, is avoided. It can be understood that the depth of the stamped groove 23 is always less than the wall thickness of the boss 21.

In some embodiments, referring to FIG. 6, the outer side surface 210 of the boss 21 includes the straight line extension portion 212. For instance, a portion of the outer side surface 210 of the boss 21 except for the inner chamfer forms the straight line extension portion 212. A height H4 of the straight line extension portion 212 in the thickness direction of the cover plate 2 is in a range of 0.1mm≤H4≤2mm. For instance, the height H4 of the straight line extension portion 212 in the thickness direction of the cover plate 2 may be 0.1 mm, 0.2 mm, 0.5mm, 0.8mm, 1mm, 1.2mm, 1.5mm, or 2mm. Certainly, the disclosure does not impose any limitation on this, and the height H4 of the straight line extension portion 212 in the thickness direction of the cover plate 2 may be reasonably selected within the above range according to actual needs. In this way, on one hand, the situation where the height of the straight line extension portion 212 being excessively small, for example, less than 0.1mm, resulting in the embedding depth of the boss 21 into the outer casing 1 being excessively shallow, is avoided. In the above situation, the laser at the welding mark 25 between the connecting edge 24 and the end surface of the outer casing 1 may not be well blocked. On the other hand, the height of the straight line extension portion 212 may be prevented from being excessively large (e.g., greater than 2mm), and the boss 21 is thus prevented from occupying too much internal space of the outer casing 1, so the internal space utilization and energy density of the battery 100 are thus improved.

In some embodiments, referring to FIG. 6, in the radial direction of the cover plate 2, a width W1 of the stamped groove 23 and a width W2 of the groove 22 satisfy 0.1≤W1/W2≤1. For instance, a ratio of W1 to W2 may be 0.1, 0.2, 0.3, 0.4, 0.5, 0.6, 0.7, 0.8, 0.9, or 1. When the ratio is 1, the width W1 of the stamped groove 23 in the radial direction of the cover plate 2 is the same as the width W2 of the groove 22. Certainly, the disclosure does not impose any limitation on this, and the ratio of W1 to W2 may be reasonably selected within the above range according to actual needs. In this way, it may ensure that the processing equipment can smoothly extend into the groove 22 to process the stamped groove 23, and ensure that when processing the stamped groove 23, it can better push the cover plate material at the stamped groove 23 to flow toward the outer groove wall 223 of the groove 22, so as to reduce the outer chamfer 211 of the boss 21 and increase the length of the straight line extension portion 212 on the outer side surface 210 of the boss 21. As such, when laser seam welding is performed between the connecting edge 24 of the cover plate 2 and the end portion of the outer casing 1, the boss 21 may better block the laser.

In some embodiments, referring to FIG. 6, an outer chamfer 211 is also provided at the connection between the outer side surface 210 and the bottom surface 213 of the boss 21. The outer chamfer 211 is opposite to the inner chamfer 221. A radius R1 of the outer chamfer 211 has a value range of: 0.1mm≤R1≤1.2mm. For example, the radius R1 of the outer chamfer 211 may be 0.1mm, 1.2mm, 0.4mm, 0.5mm, 0.8mm, 1mm, and 1.2mm. Certainly, the disclosure does not impose any limitation on this, and the radius R1 of the outer chamfer 211 may be reasonably selected within the above range according to actual needs. That is, after processing the stamped groove 23, the radius of the outer chamfer 211 of the boss 21 facing the outer casing 1 is within the above range, which may ensure that the outer side surface 210 of the boss 21 adheres well to the inner wall of the outer casing 1 to block the laser.

In some embodiments, the bottom wall 222 of the groove 22, except for the portion with the stamped groove 23, is provided with a welding region 224. The welding region 224 is a welding mark formed by welding the cover plate 2 with the internal components of the battery, and the cover plate 2 may be electrically connected to the tab 31 through the welding region 224. For instance, the welding region 224 and the tab 31 may be directly welded to achieve electrical connection between the cover plate 2 and the tab 31. Alternatively, the welding region 224 may also achieve electrical connection with the tab 31 through an intermediate transferring member such as the current-collecting plate 4. As such, there are various approaches for connecting the cover plate 2 with the tab 31, which may be rationally selected according to actual needs.

In a specific example, the battery 100 may also include the current-collecting plate 4 disposed between the cover plate 2 and the tab 31. The current-collecting plate 4 is welded to the welding region 224 of the cover plate 2 and the tab 31. In other words, the cover plate 2 and the tab 31 achieve a transition connection through the current-collecting plate 4, and the current-collecting plate 4 acts as an intermediate transferring member between the cover plate 2 and the tab 31. Herein, the boss 21 may abut against the current-collecting plate 4, so that, on one hand, the boss 21 may be used to press the current-collecting plate 4 to ensure that the position of the current-collecting plate 4 and the terminal assembly 3 in the outer casing 1 is fixed. On the other hand, since the boss 21 is a part of the structure of the cover plate 2 and is a metal part, even if the boss 21 is not electrically connected to the current-collecting plate 4 (for example, a middle region of the current-collecting plate 4 is welded to the cover plate 2, and the boss 21 and the welding region 224 are spaced apart in the radial direction), the boss 21 can still be used to conduct heat. In some possible embodiments, the boss 21 may be directly welded to the current-collecting plate 4 to achieve conduction between the cover plate 2 and the current-collecting plate 4. In this case, the boss 21 may achieve both electrical connection and heat conduction.

Understandably, when the laser penetration welding approach is used to weld the bottom wall 222 of the groove 22 and the current-collecting plate 4, a laser irradiation direction is the same as the thickness direction of the cover plate 2. Laser energy density when the laser irradiates on a surface of an object to be welded is related to a distance from a laser focus to a welding surface. Since an inner wall surface of the stamped groove 23 is not a plane perpendicular to the laser, if welding is performed inside the stamped groove 23, different welding positions have different distances from the laser focus. Different laser energy densities may thus be provided at different points, which may lead to inconsistent welding depths at various points, so effective connection between the stamped groove 23 and the current-collecting plate 4 may not be ensured. In this embodiment, the welding region 224 is disposed on the straight portion of the bottom wall 222, so that the welding region 224 avoids the stamped groove 23, so that the laser energy is ensured to be better focused and penetrates the cover plate 2 to reach the current-collecting plate 4, and an effective and reliable connection is thus formed between the boss 21 and the current-collecting plate 4.

In some embodiments, referring to FIG. 6, the width W2 of the groove 22 in the radial direction of the cover plate 2 is in a range of 2mm≤W2≤15mm. For instance, the width W2 of the groove 22 in the radial direction of the cover plate 2 may be 2mm, 3mm, 4mm, 5mm, 6mm, 7mm, 8mm, 9mm, 10mm, 11mm, 12mm, 13mm, 14mm, or 15mm. Certainly, the disclosure does not impose any limitation on this, and the width W2 of the groove 22 in the radial direction of the cover plate 2 may be reasonably selected within the above range according to actual needs. As such, on one hand, the width of the groove 22 is prevented from being excessively small. For instance, when the width is less than 2mm, it is difficult for the welding equipment to extend into the groove 22 to perform welding operations, and it is difficult for the processing equipment to extend into the groove 22 to process the stamped groove 23. On the other hand, the width of the groove 22 is prevented from being excessively large. For instance, when the width is greater than 15mm, an area of a surface of the cover plate 2 for thermal contact with a module cooling system may be excessively small, which is not conducive to the external heat dissipation of the battery 100.

In some embodiments, referring to FIG. 3 and FIG. 6 together, the width W3 of the welding region 224 in the radial direction of the cover plate 2 has a value range of: 0.5mm≤W3≤13mm. For example, the width W3 of the welding region 224 in the radial direction of the cover plate 2 may be 0.5mm, 1mm, 2mm, 4mm, 6mm, 8mm, 10mm, 12mm, or 13mm. Certainly, the disclosure does not impose any limitation on this, and the width W3 of the welding region 224 in the radial direction of the cover plate 2 may be reasonably selected within the above range according to actual needs. In this way, on one hand, the width of the welding region 224 is prevented from being excessively small. For instance, when the width is less than 0.5mm, a welding area between the boss 21 and the current-collecting plate 4 is excessively small, resulting in high resistance at the welding point and poor current-carrying capacity. On the other hand, the width of the welding region 224 is prevented from being excessively large. For instance, when the width is greater than 13mm, the welding area is excessively large, making it difficult to ensure welding quality.

In some embodiments, referring to FIG. 3, in the radial direction of the cover plate 2, a minimum spacing T between the stamped groove 23 and the welding region 224 satisfies 0.2 mm ≤ T ≤ 1 mm. For instance, the minimum spacing T between the stamped groove 23 and the welding region 224 may be 0.2 mm, 0.3 mm, 0.4 mm, 0.5 mm, 0.6 mm, 0.7 mm, 0.8 mm, 0.9 mm, or 1 mm. Certainly, the disclosure does not impose any limitation on this, and the minimum spacing T between the stamped groove 23 and the welding region 224 may be reasonably selected within the above range according to actual needs. In this way, welding energy is prevented from being transferred to the stamped groove 23 due to excessively small spacing, so welding explosion points are prevented from appearing. Further, interference between the stamped groove 23 and the welding region 224 is prevented from occurring, and stress during the welding process is released.

In some embodiments, hardness of the cover plate 2 is greater than or equal to 100HV. In this way, it may ensure that the cover plate 2 possesses sufficient strength and good pressure resistance performance. For instance, the cover plate 2 may be a steel structural component, for example, the cover plate 2 may be a cold-rolled carbon steel sheet and strip for general use (SPCC).

In the following paragraphs, an electronic apparatus of the second aspect of the disclosure is described.

The electrical apparatus of this embodiment may be a vehicle, a mobile phone, a portable device, a notebook computer, a ship, a spacecraft, an electric toy, an electric tool, etc. The vehicle may be but not limited to a fuel vehicle, a gas vehicle, or a new energy vehicle, and the new energy vehicle may be a pure electric vehicle, a hybrid vehicle, or a range-extended vehicle, etc. The spacecraft includes but not limited to an airplane, a rocket, a space shuttle, a spaceship, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The electronic apparatus may be a battery module, a battery pack, etc. The above electronic apparatus is not particularly limited in the embodiments of the disclosure.

The electronic apparatus may include: an apparatus body and the battery 100 in the above embodiments. The apparatus body may include a battery compartment, where the battery 100 is provided in the battery compartment and electrically connected to the apparatus body. For instance, a power supply interface may be provided in the battery compartment, and the battery 100 may be connected to the power supply interface.

In the electronic apparatus of the embodiments of the disclosure, by providing the battery 100 in the above embodiments, the welding quality of the battery 100 is improved, and improved user experience is thus provided.

It shall be pointed out that phrases such as "an embodiment", "embodiments", "exemplary embodiments", "some embodiments", etc. mentioned in the specification indicate that the described embodiments may include specific features, structures, or characteristics, but not every embodiment necessarily includes such specific features, structures, or characteristics. Moreover, such phrases do not necessarily refer to the same embodiment. Further, when describing specific features, structures, or characteristics in together with the embodiments, implementing such features, structures, or characteristics in combination with other embodiments, whether explicitly or implicitly described, is within the knowledge of a person having ordinary skill in the art.

In general, terms shall be understood at least partially based on their contextual usage. For instance, at least partially according to the context, the term "one or more" used in the text may be used to describe any feature, structure, or characteristic in a singular sense, or may be used to describe a combination of features, structures, or characteristics in a plural sense. Similarly, at least partially according to the context, terms such as "a" or "the" may also be understood to convey singular usage or to convey plural usage.

It should be easily understood that "on", "above", and "over" in this disclosure shall be interpreted in the broadest way, so that "on" not only means "directly on something", but also includes the meaning of "on something" with intermediate features or layers in between, and "above" or "over" not only includes the meaning of "above" or "over something", but may also include the meaning of "above" or "over something" without intermediate features or layers in between (i.e., directly on something).

In addition, for ease of explanation, spatial relative terms may be used in the text, such as "below", "beneath", "lower", "above", "upper", etc., to describe the relationship of one element or feature to another element or feature as shown in the figures. The spatial relative terms are intended to encompass different orientations of the device in use or operation in addition to the orientation depicted in the figures. The device may have other orientations (rotated 90 degrees or at other orientations), and the spatial relative descriptive words used in the text may be interpreted accordingly.

## Claims

1. A battery (100), comprising:
an outer casing (1) comprising an opening; and
a cover plate (2) closing the opening, wherein the battery (100) is **characterized in that** a portion of the cover plate (2) adjacent to an edge protrudes toward an inner cavity of the outer casing (1) to form a boss (21), a side of the boss (21) facing away from the inner cavity of the outer casing (1) comprises a groove (22), and a portion of the cover plate (2) located at a radial outer side of the boss (21) forms a connecting edge (24),
the boss (21) is embedded into the opening, the connecting edge (24) overlaps an end portion of the outer casing (1), a welding mark (25) is formed between the connecting edge (24) and the end portion of the outer casing (1), a size of a cross section of the welding mark (25) gradually decreases in a direction from a radial outer side to a radial inner side of the cover plate (2), and the cross section is determined by a central axis of the cover plate (2) and any radial line,
an inner wall of the groove (22) comprises a bottom wall (222) and an outer groove wall (223) surrounding an outer periphery of the bottom wall (222), and a stamped groove (23) is provided at connection between the bottom wall (222) and the outer groove wall (223).

2. The battery (100) according to claim 1, wherein the outer groove wall (223) comprises a straight wall portion (2231) extending in a thickness direction of the cover plate (2), and
in a radial direction of the cover plate (2), an outermost end of the stamped groove (23) does not exceed the straight wall portion (2231).

3. The battery (100) according to claim 2, wherein the stamped groove (23) has a groove cross section taken along a reference plane, and the reference plane is determined by the central axis of the cover plate (2) and any radial line, and
the groove cross section is symmetrically structured at a portion on either side of the central axis in the radial direction of the cover plate (2).

4. The battery (100) according to claim 2, wherein the stamped groove (23) has a groove cross section taken along a reference plane, and the reference plane is determined by the central axis of the cover plate (2) and any radial line, and
the groove cross section is an asymmetric structure at a portion on either side of the central axis in the radial direction of the cover plate (2), and
a deepest part of the stamped groove (23) is located on a side of a center line L of the groove (22) cross section of the stamped groove (23) in a width direction thereof close to the outer groove wall (223).

5. The battery (100) according to claim 1, wherein a height H1 of the cover plate (2) at the boss (21) is in a range of 0.8 mm ≤ H1 ≤ 5 mm,
a depth H2 of the groove (22) in a thickness direction of the cover plate (2) is in a range of 0.1 mm ≤ H2 ≤ 4.5 mm,
a depth H3 of the stamped groove (23) in the thickness direction of the cover plate (2) is in a range of 0.05 mm ≤ H3 ≤ 0.4 mm,
an outer side surface (210) of the boss (21) comprises a straight line extension portion (212) attached to an inner wall of the outer casing (1), a height H4 of the straight line extension portion (212) in the thickness direction of the cover plate (2) is in a range of H4 ≥ 0.1 mm,
in a radial direction of the cover plate (2), a width W1 of the stamped groove (23) and a width W2 of the groove (22) satisfy 0.05≤W1/W2≤0.2, and/or
connection between the outer side surface (210) and a bottom surface (213) of the boss (21) is further provided with an outer chamfer (211), and a radius R1 of the outer chamfer (211) is in a range of 0.1 mm ≤ R1 ≤ 1.2 mm.

6. The battery (100) according to any one of claims 1-5, further comprising:
a terminal assembly (3) disposed in the outer casing (1), wherein a tab (31) is provided at one end of the terminal assembly (3) facing the cover plate (2),
a portion of the bottom wall (222) other than the stamped groove (23) is provided with a welding region (224), and the cover plate (2) is electrically connected to the tab (31) through the welding region (224).

7. The battery (100) according to claim 6, further comprising:
a current-collecting plate (4) located between the cover plate (2) and the tab (31) and connected to the welding region (224) of the cover plate (2) and the tab (31), wherein the boss (21) abuts against the current-collecting plate (4).

8. The battery (100) according to claim 6, wherein in the radial direction of the cover plate (2), a minimum spacing T between the stamped groove (23) and the welding region (224) satisfies 0.2 mm ≤ T ≤ 1 mm.

9. The battery (100) according to any one of claims 1-5, wherein hardness of the cover plate (2) is greater than or equal to 100 HV.

10. An electronic apparatus, comprising the battery (100) according to any one of claims 1-9.
